# EUROPÄISCHE PATENTSCHRIFT

(11) **EP 1 155 354 B1**
(45) Veröffentlichungstag und Bekanntmachung des Hinweises auf die Patenterteilung: **09.11.2005**
(21) Anmeldenummer: 00905040.2
(22) Anmeldetag: 09.02.2000
(51) Int. Cl.: G02F 1/155, G02F 1/1343

(54) **ELEKTROCHROME GRADIENTENBLENDE**
ELECTROCHROME GRADIENT DIAPHRAGM
DIAPHRAGME A GRADIENT ELECTROCHROME

(30) Priorität: 20.02.1999 DE 19907334
(43) Veröffentlichungstag der Anmeldung: 21.11.2001
(73) Patentinhaber: Bayer Innovation GmbH, 40225 Düsseldorf (DE)
(72) Erfinder: NEIGL, Ralf, D-51373 Leverkusen (DE); THOMA, Ralph, D-86167 Augsburg (DE); GAVRILOV, Vladimir, Moscow, 141700 (RU); SHELEPIN, Igor, Moscow, 141700 (RU)
(74) Vertreter: Thomaier, Jörg
(86) Internationale Anmeldenummer: PCT/EP2000/001025
(87) Internationale Veröffentlichungsnummer: WO 2000/049455

(56) Entgegenhaltungen:
- EP-A- 0 257 675
- US-A- 3 741 629
- US-A- 5 412 492
- US-A- 5 813 742
- PATENT ABSTRACTS OF JAPAN vol. 010, no. 110 (P-450), 24. April 1986 (1986-04-24) & JP 60 241031 A (SUWA SEIKOSHA KK), 29. November 1985 (1985-11-29) -& JP 60 241031 A
- PATENT ABSTRACTS OF JAPAN vol. 013, no. 502 (P-958), 13. November 1989 (1989-11-13) & JP 01 202712 A (NEC IC MICROCOMPUT SYST LTD), 15. August 1989 (1989-08-15)

## Beschreibung

Die Erfindung betrifft eine elektrisch steuerbare Kamerablende und ein Bildaufzeichhungsgerät mit solchen elektrisch steuerbaren Blenden.

Elektrisch steuerbare Blenden für Bildaufzeichnungsgeräte sind bekannt. Sie bestehen typischerweise aus einer elektrochromen Zelle, die in konzentrische Bereiche eingeteilt ist, entsprechend den verschiedenen Blendenstufen. Diese Zonen werden gebildet von konzentrisch angeordneten Elektroden, die sich jeweils paarweise auf den beiden Platten, die die Zelle bilden, gegenüber liegen (US 3 476 029, JP 08 029 831). Diese einfache Elektrodenanordnung wurde in US 5,471,339 durch eine dritte Gegenelektrode am äußeren Rand der Struktur modifiziert. In US 4 218 120 wurde als Problem gesehen, daß es entlang der ringförmigen Elektroden, die eine Stromzuführung nur an einer Seite haben zu einem Spannungsabfall kommt, so daß eine inhomogene Abdunklung stattfindet. Der Widerstand der Elektroden führt außerdem zu einer Zeitverzögerung bei der Verdunklung. Deshalb wurden zwei Zellen mit einer gemeinsamen Elektrode zusammengefügt, wobei der Punkt der Stromzuführung der ringförmigen Elektroden der beiden Zellen um 180 Grad gegeneinander verdreht ist. In EP 0 683 421 wird eine Zelle mit einer ringförmigen, transparenten Elektrode offenbart, mit einem zentralen, kreisförmigen Bereich ohne Elektrode. Wahlweise kann der Bereich mit der ringförmigen Elektrode durch Anlegen einer Spannung homogen verdunkelt werden oder lichtdurchlässig bleiben.

Eine aus einer mit Flüssigkristallmedium gefüllten Zelle bestehende Blende ist aus EP-A-0257675 bekannt.

Bei den bekannten elektrochromen Blenden wird die Blendenfunktion durch eine aufwendige Strukturierung der Elektrode und einer damit verbundenen komplexen Ansteuerung der einzelnen Blendenelemente erreicht.

Der Erfindung liegt die Aufgabe zu Grunde, den Aufbau der elektrisch steuerbaren Blende zu vereinfachen.

Die erfindungsgemäße elektrisch steuerbare Blende, enthält zwei transparente Platten, die durch einen umlaufenden Dichtrahmen miteinander zu einer Zelle verbunden sind. Auf den einander zugewandten Oberflächen weisen die Platten flächige, transparente Elektroden auf. In der Zelle befindet sich ein elektrochromes Medium. Die Elektroden weisen keine Strukturierung auf und sind entlang des umlaufenden Dichtrahmens elektrisch kontaktiert.

Die Kontaktierung der Elektroden erfolgt vorzugsweise so, daß sie entlang des Dichtrahmens beim Anlegen einer Spannung im wesentlichen dasselbe Potential aufweisen. Dies heißt, daß geringe Schwankungen des Potentials entlang des Dichtrahmens z.B. bedingt durch die endlichen Widerstände in den Kontakten, die erfindungsgemäße Funktion der Blende nicht beeinträchtigen.

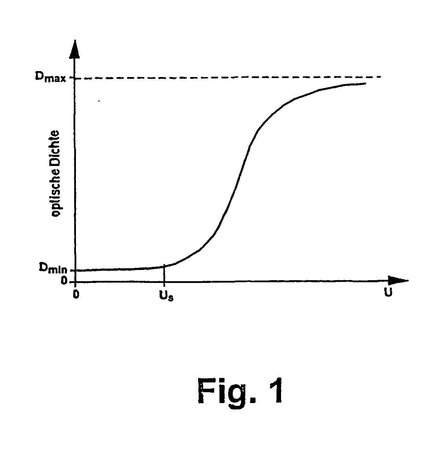

Beim Anlegen einer Spannung U oberhalb der Schwellenspannung U_{S} (Fig. 1) an den Elektroden setzt der elektrooptische Effekt (Dₘᵢₙ) ein und erreicht bei einer weiteren Erhöhung der Spannung U seine maximale Stärke (Dₘₐₓ). Die Abhängigkeit des elektrooptischen Effektes von der Spannung kann durch eine s-förmige Funktion (Fig. 1), deren Steigung und Schwellspannung abhängig vom benutzten elektrooptischen Medium ist, beschrieben werden. Der elektrooptische Effekt bedeutet hier, daß die optische Dichte der Zelle sich in Abhängigkeit von der angelegten Spannung verändert und mit zunehmender Spannung zunimmt.

Aufgrund des Flächenwiderstandes im Bereich des Elektrodenmaterials tritt an den Elektroden auf beiden Platten ein Spannungsabfall bezüglich der entlang des Dichtrahmens anliegenden Spannung auf, der umso größer ist, je größer der Abstand zum Dichtrahmen ist. Bei einer durch den Dichtrahmen abgeteilten runden Blendenfläche, wie sie einer bevorzugten Ausführungsform entspricht, ist der Spannungsabfall im Mittelpunkt am größten. Dieser Spannungsabfall kann durch einen Kurzschluß zwischen den Elektroden in der Blendenmitte noch verstärkt werden, da dann die gesamte Spannung über dem Blendenradius abfällt.

Die elektrisch leitende Verbindung zwischen den Elektroden erfolgt zweckmäßigerweise über einen kleinen leitenden Punkt, vorzugsweise aus einem Metall.

Der Spannungsabfall über den Elektroden bewirkt bei entsprechender Wahl der angelegten Spannung oberhalb der Schwellenspannung, daß im äußeren Bereich des durch den Dichtrahmen abgeteilten Elektrodenbereichs der elektrochrome Effekt einsetzt, im Zentrum der Blende die Schwellenspannung aber, aufgrund des Spannungsabfalls über der transparenten leitfähigen Schicht, nicht mehr erreicht wird, so daß dieser Bereich transparent bleibt. Durch Variation der angelegten Spannung kann der Durchmesser des transparenten Zentrums variiert werden.

Der spezifische elektrische Flächenwiderstand des transparenten Elektrodenmaterials liegt bevorzugt zwischen 2 Ω pro Quadrat und 10 kΩ pro Quadrat, besonders bevorzugt zwischen 5 Ω pro Quadrat und 1 kΩ pro Quadrat und ganz besonders bevorzugt zwischen 6 Ω pro Quadrat und 70 Ω pro Quadrat. Das transparente Elektrodenmaterial besteht vorzugsweise aus Indium-Zinn-Oxid, SnO oder ZnO:Al oder SnO₂:Sb. Material und Flächenwiderstand kann für die beiden Elektroden unterschiedlich sein.

Die Kontaktierung der inneren Elektrodenflächen kann durch jeweils eine zusätzliche niederohmige, elektrisch leitfähige Schicht, die außerhalb des durch den Dichtrahmen begrenzten transparenten Elektrodenbereichs auf die transparente Elektrodenfläche aufgebracht ist, mit dieser in elektrischem Kontakt steht und von innen durch den Dichtrahmen begrenzt ist, vorgenommen werden.

Das niederohmige Elektrodenmaterial sowie die Kurzschluß-Kontaktierung hat einen spezifischen elektrischen Flächenwiderstand kleiner als 0,2 Ω pro Quadrat. Sie besteht vorzugsweise aus Kupfer, Gold, Aluminium, Silber oder Zink oder eine Suspension aus diesen Metallen.

Das elektrochrome Medium kann eine Flüssigkeit, ein Gel oder ein Feststoff sein. Sie enthalten eine oder mehrere elektrochrome Substanzen, ein Lösungsmittel, einen oder mehrere UV-Absorber, gegebenenfalls ein oder mehrere Leitsalze sowie gegebenenfalls einen oder mehrere Verdicker. Im Sinne der Erfindung geeignete elektrochrome Substanzen sind zwei oder mehr Redoxsubstanzen, von denen mindestens eine reduzierbar und mindestens eine oxidierbar ist. Alle Substanzen sind farblos oder nur schwach gefärbt.

Nach Anlegen einer Spannung an die EC-Zelle wird mindestens eine Substanz reduziert, mindestens eine oxidiert, wobei wenigstens eine farbig wird, das heißt, daß ihre Lichtschwächung im Bereich des sichtbaren Spektrums zunimmt. Nach Abschalten der Spannung bilden sich die ursprünglichen Redoxsubstanzen wieder zurück und die EC-Zelle entfärbt sich. Die Grundreaktion für ein Paar von Redoxsubstanzen ist

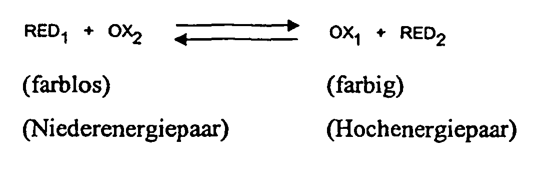

Bei Verwendung von mehreren verschiedenen Substanzen RED oder OX findet sie analog statt.

Die Strom-Spannungs-Kennlinie einer EC-Zelle ist s-förmig (Fig. 1). Unterhalb einer gewissen Spannung, der Schaltspannung (U_{sch}), fließt kein Strom in der EC-Zelle und es findet kein elektrochromer Effekt statt. Oberhalb der Schaltspannung kommt es aufgrund der einsetzenden Ladungsübertragung von den Elektroden auf das elektrochrome Material zu einem Anstieg des Stromes und der elektrochrome Effekt setzt ein. Beim Erreichen der Sättigungsspannung (U_{Sätt}) geht der Strom in einen Sättigungstrom (I_{Sätt}) über, der auch bei einer weiteren Spannungserhöhung konstant bleibt. Bei U_{Sätt} erreicht die EC-Zelle ihre maximale Farbtiefe.

Aus US-P 4 902 108 ist bekannt, daß Paare von Redoxsubstanzen geeignet sind, bei denen die reduzierbare Substanz wenigstens zwei chemisch reversible Reduktionswellen im Cyclischen Voltammogramm und die oxidierbare Substanz entsprechend wenigstens zwei chemisch reversible Oxidationswellen besitzen. Solche Substanzen sind im Sinne der Erfindung geeignet. Aus WO 97/30134 sind solche Redoxsysteme bekannt, in denen RED₁ und OX₂ bzw. OX₁ und RED₂ über eine Brücke B kovalent aneinander gebunden sind. Solche Substanzen sind im Sinne der Erfindung ebenfalls geeignet. Ebenfalls geeignet im Sinne der Erfindung sind solche Redoxsysteme, bei denen der reversible Übergang zwischen RED und OX oder umgekehrt mit dem Bruch bzw. dem Aufbau einer σ-Bindung verbunden ist. Solche Substanzen sind beispielsweise aus WO 97/30135 bekannt. Im Sinne der Erfindung geeignet sind auch Metallsalze oder Metallkomplexe von solchen Metallen, die in mindestens zwei Oxidationsstufen existieren. Vorteilhaft unterscheiden sich die beiden Oxidationsstufen um 1.

Ebenfalls im Sinne der Erfindung geeignet sind Oligo- und Polymere, die mindestens eines der genannten Redoxssyteme, aber auch Paare solcher Redoxsysteme, wie sie oben definiert sind, enthalten. Ebenfalls im Sinne der Erfindung geeignet sind Mischungen der eben beschriebenen Substanzen, vorausgesetzt diese Mischungen enthalten mindestens ein reduzierbares und mindestens ein oxidierbares Redoxsystem. Geeignete Lösungsmittel, Leitsalze, UV-Absorber und Verdicker sind aus den oben zitierten Patentanmeldungen ebenfalls bekannt und im Sinne der Erfindung nutzbar.

Die Färbung des für die erfindungsgemäße Aufgabe zu optimierenden Zusammensetzung von zwei oder mehr Redoxsubstanzen wird durch Auswahl geeigneter Farbstoffsysteme derart eingestellt, daß die Absorption über den Wellenlängenbereich von 380 nm bis 750 nm möglichst gleichmäßig ist. Die Quantifizierung dieser Farbneutralität erfolgt vorzugsweise mit einem Photometer, dessen spektrale Empfindlichkeit an die des benutzten Bildaufzeichnungsmediums angepaßt ist. Bei der Verwendung üblicher Silberhalogenidfilme sind dies die sogenannten Status-A-Densitometer (DIN-Norm 4512, Teil 9, Januar 1993). Hierbei handelt es sich um lögarithmisch skalierende Filterphotometer mit einer maximalen Empfindlichkeit bei 440 nm (blau), 530 nm (grün) und 620 nm (rot). Die Differenzwerte D_{blau} - D_{grün} und Dᵣₒₜ - D_{grün} sind ein Maß für die Abweichung einer erfindungsgemäßen EC-Zelle von der Farbneutralität. Bevorzugt für die erfindungsgemäße Gestaltung einer EC-Zelle seien Mischungen von Redoxsubstanzen genannt, die bei Ansteuerung der Zelle auf maximale Lichtschwächung zu Meßwerten D_{blau} - D_{grün} und Dᵣₒₜ - D_{grün} führen, die dem Betrage nach kleiner als 0,5, besonders bevorzugt kleiner als 0,2 sind.

Als flächige, elektrisch steuerbare Zellen können auch Zellen mit Flüssigkristallen verwendet werden, wie sie z.B. in Ullmann's Encyclopedia of Industrial Chemistry, 5. Auflage, Vol. A 15, S. 372ff beschrieben werden.

Das elektrische Steuerungssignal wird mit seiner Amplitude an die verwendete Zelle so angepaßt, daß der eingefärbte Bereich der Blende wenigstens eine, bevorzugt aber mehrere Blendenstufen überstreichen kann.

Die maximale Transmission der EC-Zelle kann durch eine Antireflexbeschichtung vorzugsweise auf beiden Zellenoberflächen vergrößert werden.

Die Amplitude des elektrischen Signals kann entweder von Hand eingestellt werden oder durch einen Lichtsensor vorgegeben werden, der entsprechend der auf die Lichteintrittsöffnung der Kamera auftreffenden Lichtintensität die Signalamplitude und damit die Lichtdurchlässigkeit der Zelle verändert, vorzugsweise in der Art, daß die bei jeder Aufnahme auf das Bildaufzeichnungsmedium fallende Belichtungsmenge annähernd konstant bleibt.

Die Vorteile der erfindungsgemäße elektrisch steuerbare Blende bestehen darin, daß sie einfach aufgebaut ist. Sie benötigt keine aufwendige ringförmige Strukturierung der Elektroden. Der im Stand der Technik als nachteilig für die homogene Abdunklung angesehene hohe Flächenwiderstand von transparenten Elektroden wird in der erfindungsgemäßen Blende vorteilhaft ausgenutzt. Gerade das transparente Elektrodenmaterial bewirkt den Spannungsabfall und damit die gewünschte inhomogene Abdunklung vom äußeren zum inneren Blendenbereich.

Die erfindungsgemäße, elektrisch steuerbare Blende ist sowohl für Stehbildkameras als auch für Laufbildkameras geeignet. Sie kann eingesetzt werden in Kameras, die als Bildaufzeichnungsmedium silberhalogenidbasierende Negativ- oder Diapositivfilme verwenden, und zwar sowohl in solchen, bei denen der Film nach der Belichtung aus der Kamera entnommen und in separaten Vorrichtungen photographisch entwickelt wird, aber auch in sogenannten Sofortbildkameras, also Kameras, die Aufzeichnungsmedien verwenden, bei denen der Prozeß der bildgebenden Entwicklung bereits in der Kamera und unmittelbar im Anschluß an die Bildaufnahme erfolgt.

Ebenso sei die Verwendung in Kameras genannt, die als Aufzeichnungsmedium Halbleiterdetektoren verwenden, vorzugsweise solche mit einem flächig angeordneten Feld von Detektoren, deren Signale elektrisch ausgelesen und in einem weiteren Speichermedium in analoger oder digitaler Form abgelegt werden. Der heute wichtigste Vertreter derartiger Kameras sind die CCD-Kameras.

### Figuren und Beispiele

Es zeigen
- Figur 1: Zusammenhang zwischen elektrischem Ansteuersignal und optischer Dichte der Zelle.
- Figur 2: Aufbau einer erfindungsgemäßen Blende.
- Figur 3: Bildaufzeichnungsgerät mit elektrischer steuerbarer Blende.
- Figur 4: Aufbau zum Nachweis der elektrischen Steuerung der Lichtschwächung und zur Farbneutralität der elektrisch steuerbaren Blende.
- Figur 5: Messung der Transmission entlang des Blendendurchmessers für die Blende aus Beispiel 1.
- Figur 6: Messung der Transmission entlang des Blendendurchmessers für die Blende aus Beispiel 2.

Eine typische für die erfindungsgemäße Aufgabe optimierte EC-Zelle hat den in der Fig. 1 skizzierten Verlauf des Zusammenhangs zwischen elektrischem Ansteuersignal und optischer Dichte der Zelle: Nach Überschreiten einer gewissen Schwellspannung U_{S} nimmt die Lichtschwächung kontinuierlich zu. Das heißt die Lichtschwächung der EC-Zelle läßt sich mit Hilfe des elektrischen Steuersignals kontinuierlich einstellen.

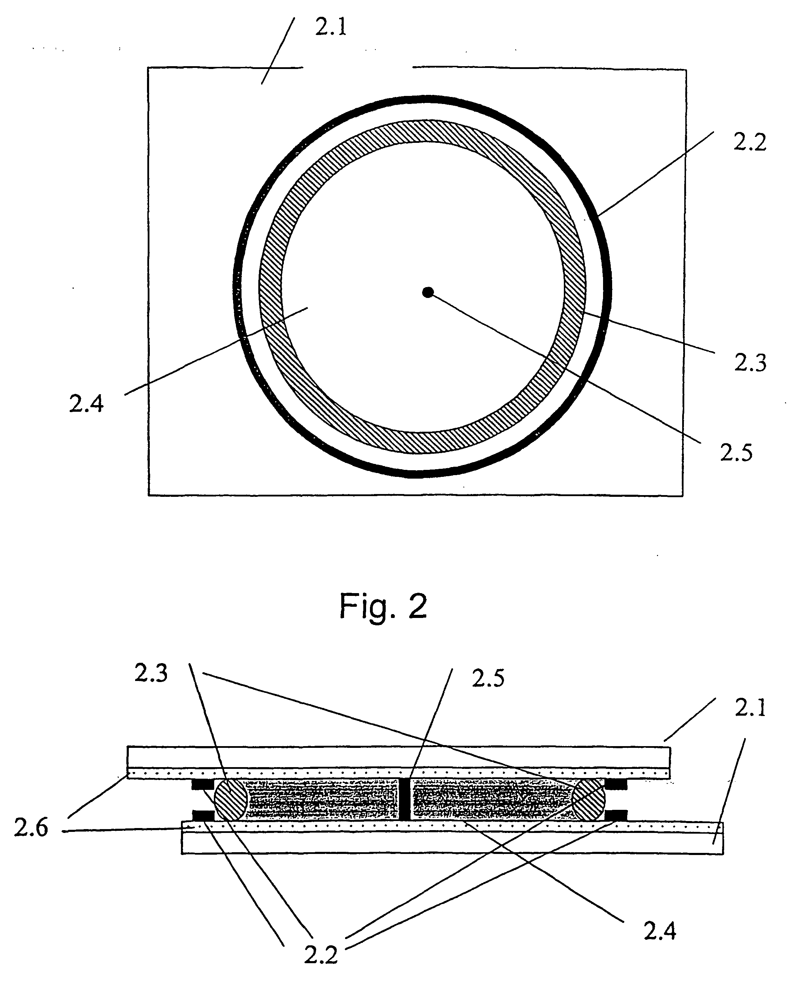

Ein Beispiel eines Aufbaus einer erfindungsgemäßen Zelle ist in Figur 2 oben in Draufsicht und unten in Seitenansicht zu sehen.

Zwischen zwei Glasplatten (2.1), die mit ITO beschichtet sind (2.6), wird ein elektrooptisches Medium (2.4) eingebracht. Der Raum, den dieses Medium einnimmt, wird, neben den Glasplatten, von dem umschließenden Klebwulst (2.3) definiert. Durch den kreisförmigen Metallstreifen auf beiden Elektroden (2.2) wird eine kreisförmige Äquipotentialfläche definiert. Um einen besonders hohen Spannungsabfall zu erreichen, können die Elektroden in der Mitte durch eine elektrisch leitende Verbindung (2.5) kurzgeschlossen werden.

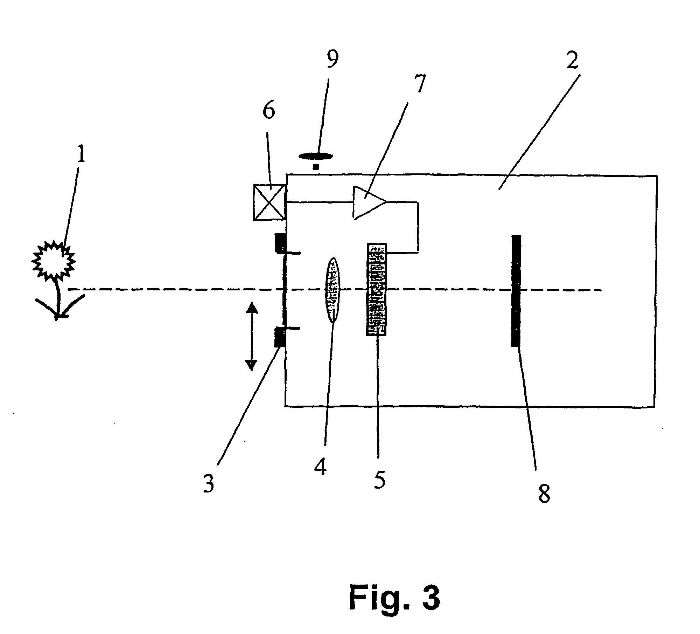

Ein Beispiel für ein erfindungsgemäßes Bildaufzeichnungsgerät ist in der Fig. 3 skizziert:

Das vom Anwender ausgewählte Motiv 1 soll von der Stehbildkamera 2 auf das Aufzeichnungsmedium 8 aufgenommen werden. Der mechanische Verschluß 3 ist im Ruhezustand der Kamera geschlossen. Er verhindert nicht nur eine Vorbelichtung des lichtempfindlichen Materials 8, sondern schützt auch die elektrochrome Zelle 5 vor der Dauerbelastung durch die eventuell starke Sonneneinstrahlung. Der photoempfindliche Belichtungssensor 6 erzeugt ein elektrisches Signal, das nach einer geeigneten Konditionierung im elektrischen Verstärker 7 die Lichtschwächung der elektrochromen Zelle 5 steuert. Sobald der mechanische Auslöser 9 betätigt wird, öffnet sich der mechanische Verschluß für eine feste wohldefinierte Zeit und gibt den Weg frei für die Abbildung des Objektes durch das Objektiv 4 auf das Aufzeichnungsmedium 8. Danach wird der Verschluß wieder lichtdicht verschlossen. Die Signalverstärkung des Wirkungskreises Belichtungssensor / Verstärker / EC-Zelle ist so gewählt, daß im Arbeitsbereich des Systems die auf das Aufzeichnungsmedium auftreffende Lichtmenge unabhängig ist von der Helligkeit des ausgewählten Objektes.

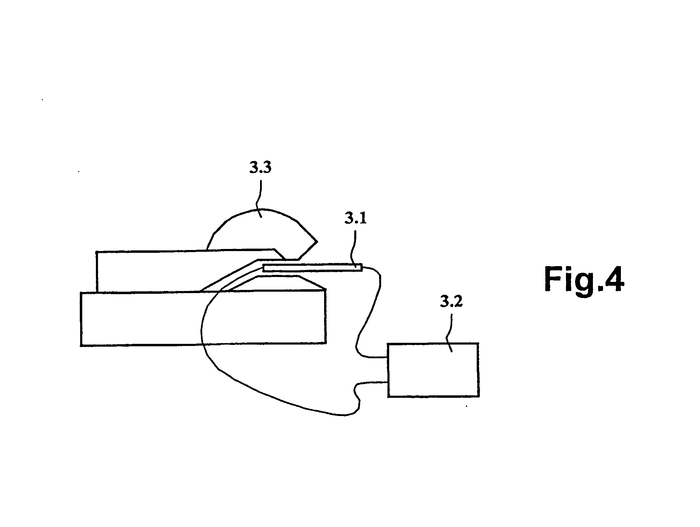

Aufbau zum Nachweis der elektrischen Steuerung der Lichtschwächung einer EC-Zelle sowie zur Messung ihrer Abweichung von der Farbneutralität ist in Fig. 4 skizziert:

Die EC-Zelle besteht aus zwei 1 mm-Glasplatten mit einer transparenten elektrisch leitfähigen Beschichtung aus Indium/Zinn-Oxid (ITO) mit einem spezifischen elektrischen Flächenwiderstand von 15 Ω/ square. Die Platten haben einen Abstand von 70 µm. Der Hohlraum zwischen den Platten ist mit einem elektrochromen Medium mit Methylviologen verbunden mit 5,10-Dihydro-5,10-dimethyl-phenazin in einer Konzentration von 0,1 mol/Liter in Propylencarbonat als aktiver Substanz gefüllt und nach außen hin abgedichtet. Die EC-Zelle besitzt keine Antireflexbeschichtung. Die EC-Zelle befindet sich auf dem Meßtisch eines Densitometers vom Typ X-Rite 310 3.3. Die Anschlußkontakte der EC-Zelle 3.1 sind an ein einstellbares Gleichspannungsversorgungsgerät 3.2 angeschlossen. Mit dem Status-A-Meßfiltersatz des Densitometers werden der Reihe nach die optischen Dichten der EC-Zelle für die Filter blau, grün und rot für verschiedene Spannungen an der EC-Zelle gemessen. Aus diesen Messungen werden did Farbdichtedifferenzen zur Quantifizierung der Abweichung von der Farbneutralität der Lichtschwächung bestimmt.

Es wurden folgende Werte gemessen:

| U / Volt | D_{blau} | D_{grün} | Dᵣₒₜ | D_{blau} - D_{grün} | Dᵣₒₜ - D_{grün} |
|---|---|---|---|---|---|
| 0 | 0,15 | 0,09 | 0,08 | 0,06 | 0,01 |
| 1,2 | 0,72 | 0,58 | 0,77 | 0,14 | 0,19 |

Das heißt, die gemittelte Lichtschwächung über den Wellenlängenbereich des sichtbaren Lichts beträgt ca. 0,7. Dies entspricht etwa 2 Blendenstufen. Die Abweichung von der Farbneutralität liegt unter 0,2.

### Beispiel 1

Es wurde eine Zelle wie in Figur 2 abgebildet aufgebaut. Die mit ITO beschichteten Glasplatten weisen einen Flächenwiderstand von 6.8 Ohm/square auf. Beide Platten wurden auf der ITO beschichteten Seite mit einer ringförmigen 1 µm dicken 2 mm breiten Silberschicht mit einem Innendurchmesser von 10 mm bedampft. Eine der Platten wurde in der geometrischen Mitte des Metallkreises mit einem Leitsilberpunkt von 150 µm Dicke versehen.

Eine Mischung aus 97% photohärtendem Epoxikleber DELO-Katiobond® 4594 (DELO Industrieklebstoffe, Landsberg) und 3% Glaskugeln mit 110µm Durchmesser wurde ringförmig auf die mit ITO-beschichtete Seite der Glasplatte so aufgetragen, daß eine 2 mm breite Öffnung ausgespart wurde. Nun wurde die zweite Glasplatte so auf die Kleberaupe gelegt, daß die ITO-Schichten der beiden Platten 1 und 2 einander zugewandt waren und eine Geometrie entstand, wie in Fig. 2 gezeigt. Die Platten werden gegeneinander gepresst. Die Aushärtung des Klebers erfolgte durch 10-minütiges Belichten mit Tageslicht in der Nähe eines Fensters und anschließend für 20 min bei 105 °C ohne Belichtung.

Eine Schale wurde unter Stickstoffatmosphäre mit einer Lösung gefüllt, die 0,05 molar an den elektrochromen Verbindungen der Formeln 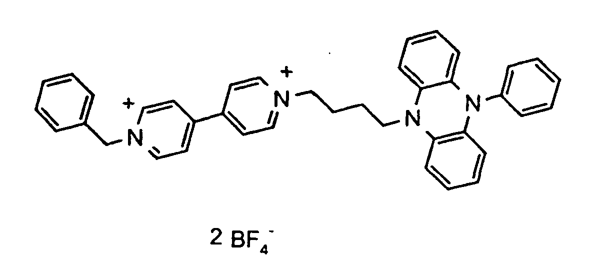 und jeweils 0,1 molar an den UV-Absorbern der Formeln 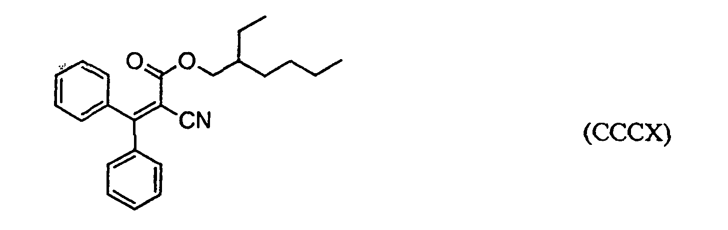 und 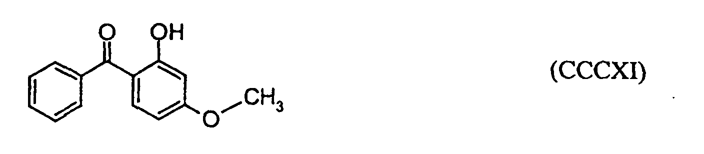 in wasserfreiem, sauerstofffreiem Propylencarbonat war.

Dann wurde die Zelle unter Stickstoffatmosphäre senkrecht so in die Schale gestellt, daß die ausgesparte Öffnung sich unterhalb des Flüssigkeitsspiegels befand. Die Schale mit der Zelle wurde in einen Exsiccator gestellt. Dieser wurde auf 0,05 mbar evakuiert und anschließend vorsichtig mit Stickstoff belüftet. Während der Belüftung stieg die elektrochrome Lösung durch die Öffnung in die Zelle hinein und füllte bis auf eine kleine Blase das gesamte Volumen aus. Die Zelle wurde aus der Lösung entnommen, unter Stickstoffatmoshäre an der Öffnung gereinigt und mit dem photochemisch härtbaren Acrylatkleber DELO-Photobond® 4497 (DELO Industrieklebstoffe, Landsberg) verschlossen. Anschließend wurde 1 min unter Stickstoffatmosphäre mit der Lampe DELOLUX® 03 (DELO Industrieklebstoffe, Landsberg) die sich in einem Abstand von 8 cm zur Öffnung 4 befand, belichtet und bei Raumtemperatur über Nacht unter Stickstoffatmosphäre ausgehärtet.

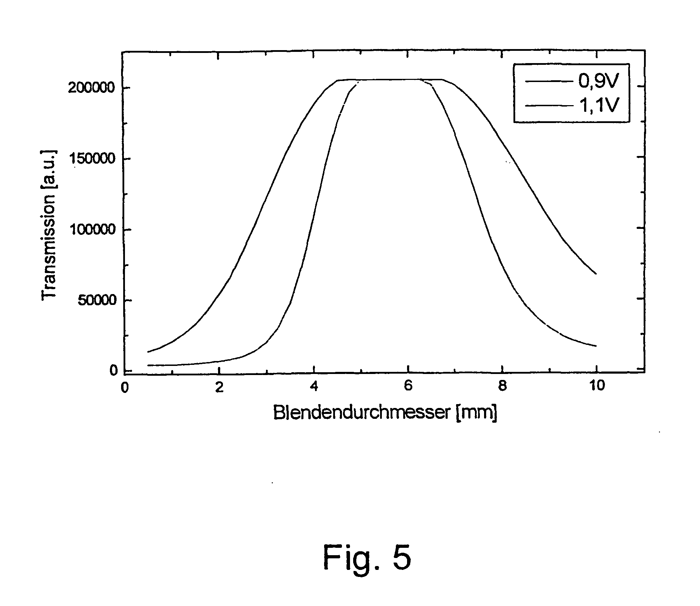

Durch Anlegen einer Spannung färbt sich die Zelle ausgehend vom Rand rasch ein. Fig. 5 zeigt Messungen der Transmission der Blende entlang ihres Durchmessers für verschiedene Spannungen. Der Effekt setzt bei 0,5V ein. Je höher die Spannung gewählt wird, desto weiter reicht die Färbung in die Mitte der Zelle hinein. In Fig. 5 sieht man den Unterschied zwischen der angelegten Spannung bei 0,9V und 1,1V. Bei höherer Spannung wird der abgedunkelte Randbereich größer und damit die Blendenwirkung stärker.

Durch Abschalten der Spannung und Kurzschließen der Kontakte verschwand die Färbung wieder rasch.

### Beispiel 2

Es wurde eine Zelle wie in Figur 2 abgebildet aufgebaut. Die mit ITO beschichteten Glasplatten weisen einen Flächenwiderstand von 67,0 Ohm/square auf. Beide Platten wurden auf der ITO beschichteten Seite mit einer ringförmigen 1µm dicken 2mm breiten Silberschicht mit einem Durchmesser von 10mm bedampft. Eine der Platten wurde in der geometrischen Mitte des Metallkreises mit einem Leitsilberpunkt der Dicke von etwa 150µm versehen.

Eine Mischung aus 97 % photohärtendem Epoxikleber DELO-Katiobond® 4594 (DELO Industrieklebstoffe, Landsberg) und 3 % Glaskugeln mit 110 µm Durchmesser wurde ringförmig auf die mit ITO-beschichtete Seite der Glasplatte so aufgetragen, daß eine 2 mm breite Öffnung ausgespart wurde. Nun wurde die zweite Glasplatte so auf die Kleberaupe gelegt, daß die ITO-Schichten der beiden Platten 1 und 2 einander zugewandt waren und eine Geometrie entstand, wie in Fig. 2 gezeigt. Die Platten werden gegeneinander gepresst. Die Aushärtung des Klebers erfolgte durch 10-minütiges Belichten mit Tageslicht in der Nähe eines Fensters und anschließend für 20 min bei 105°C ohne Belichtung.

Eine Schale wurde unter Stickstoffatmosphäre mit einer Lösung gefüllt, die 0,05 molar an den elektrochromen Verbindungen der Formeln 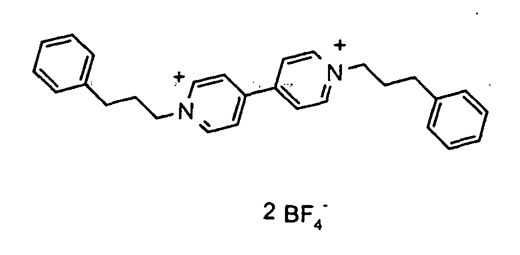 und 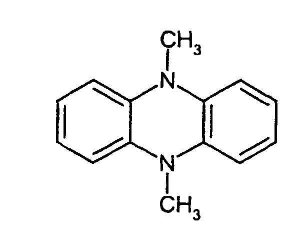 und jeweils 0,1 molar an den UV-Absorbern der Formeln 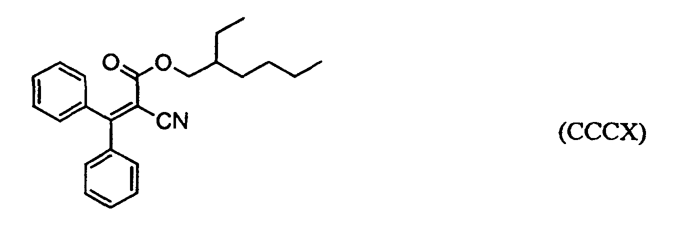 und 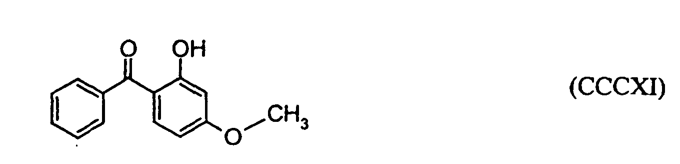 in wasserfreiem, sauerstofffreiem Propylencarbonat war.

Dann wurde die Zelle unter Stickstoffatmosphäre senkrecht so in die Schale gestellt, daß die ausgesparte Öffnung sich unterhalb des Flüssigkeitsspiegels befand. Die Schale mit der Zelle wurde in einen Exsiccator gestellt. Dieser wurde auf 0,05 mbar evakuiert und anschließend vorsichtig mit Stickstoff belüftet. Während der Belüftung stieg die elektrochrome Lösung durch die Öffnung in die Zelle hinein und füllte bis auf eine kleine Blase das gesamte Volumen aus. Die Zelle wurde aus der Lösung entnommen, unter Stickstoffatmoshäre an der Öffnung gereinigt und mit dem photochemisch härtbaren Acrylatkleber DELO-Photobond® 4497 (DELO Industrieklebstoffe, Landsberg) verschlossen. Anschließend wurde 1 min unter Stickstoffatmosphäre mit der Lampe DELOLUX® 03 (DELO Industrieklebstoffe, Landsberg) die sich in einem Abstand von 8 cm zur Öffnung befand, belichtet und bei Raumtemperatur über Nacht unter Stickstoffatmosphäre ausgehärtet.

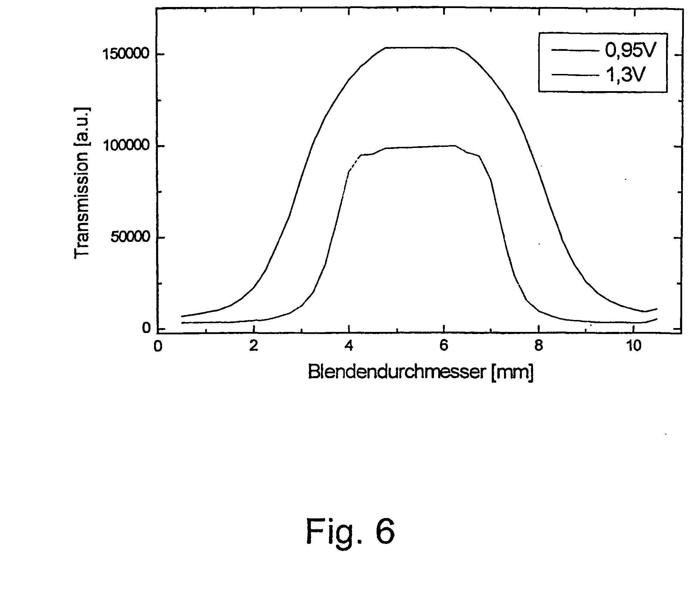

Durch Anlegen einer Spannung färbt sich die Zelle ausgehend vom Rand rasch ein. Fig. 6 zeigt Messungen der Transmission der Blende entlang ihres Durchmessers für verschiedene Spannungen. Der Effekt setzt bei 0,4V ein. Je höher die Spannung gewählt wird, desto weiter reicht die Färbung in die Mitte der Zelle hinein. In Fig. 6 sieht man den Unterschied zwischen der angelegten Spannung bei 0,95V und 1,3V. Bei höherer Spannung wird der abgedunkelte Randbereich größer und damit die Blendenwirkung stärker.

Durch Abschalten der Spannung und Kurzschließen der Kontakte verschwand die Färbung wieder rasch.

## Patentansprüche

1. Elektrisch steuerbare Kamerablende, enthaltend zwei transparente Platten (2.1), die durch einen umlaufenden Dichtrahmen (2.3) miteinander zu einer Zelle verbunden sind und auf den einander zugewandten Oberflächen flächige, transparente Elektroden (2.6) ohne Strukturierung aufweisen, die entlang des umlaufenden Dichtrahmens elektrisch kontaktiert sind, so daß ein Anliegen einer Spannung zwischen den zwei Elektroden kreisförmige Äquipotentialflächen erzeugt, **dadurch gekennzeichnet, daß** sich in der Zelle ein elektrochromes Medium (2.4) befindet, das eine Regulierung der einfallenden Lichtmenge durch Variation des Durchmessers des kreisförmigen transparenten Zentrums der Zelle über eine Variation der angelegten Spannung ermöglicht.

2. Elektrisch steuerbare Kamerablende nach Anspruch 1, **dadurch gekennzeichnet, daß** die Elektroden so kontaktiert sind, daß sie entlang des Dichtrahmens beim Anlegen einer Spannung im wesentlichen dasselbe Potential aufweisen.

3. Elektrisch steuerbare Kamerablende nach Anspruch 1 oder 2, **dadurch gekennzeichnet, daß** die transparenten Elektroden elektrisch leitend miteinander verbunden werden.

4. Elektrisch steuerbare Kamerablende nach einem der Ansprüche 1 bis 3, **dadurch gekennzeichnet, daß** die vom Dichtrahmen umrahmte Fläche ein Kreis ist.

5. Elektrisch steuerbare Kamerablende nach Anspruch 4, **dadurch gekennzeichnet, daß** die kreisförmigen transparenten Elektrodenflächen in ihrem Mittelpunkt (2.5) elektrisch leitend miteinander verbunden sind.

6. Elektrisch steuerbare Kamerablende nach einem der Ansprüche 1 bis 5, **dadurch gekennzeichnet, daß** die transparente Elektrodenschicht durch eine zusätzliche niederohmige, elektrisch leitfähige Schicht, die von innen durch den Dichtrahmen begrenzt ist, kontaktiert wird.

7. Elektrisch steuerbare Kamerablende nach einem der Ansprüche 1 bis 6, **dadurch gekennzeichnet, daß** der spezifische elektrische Flächenwiderstand des transparenten Elektrodenmaterials zwischen 2 Ω pro Quadrat und 10 kΩ pro Quadrat, bevorzugt zwischen 5 Ω pro Quadrat und 1 kΩ pro Quadrat und besonders bevorzugt zwischen 6 Ω pro Quadrat und 70 Ω pro Quadrat liegt.

8. Elektrisch steuerbare Kamerablende nach Anspruch 6 oder 7, wenn abhängig vom Anspruch 6, **dadurch gekennzeichnet, daß** der elektrische Flächenwiderstand der äußeren niederohmigen elektrisch leitfähigen Schicht kleiner als 0,2 Ω pro Quadrat ist.

9. Elektrisch steuerbare Kamerablende nach einem der Ansprüche 1 bis 8, **dadurch gekennzeichnet, daß** die Zelle ohne Ansteuerung durch ein elektrisches Signal lichtdurchlässig ist und sich mit zunehmender elektrischer Spannung zwischen den Elektroden die lichtdurchlässige Fläche von außen nach innen verkleinert.

10. Elektrisch steuerbare Kamerablende nach einem der Ansprüche 1 bis 9, **dadurch gekennzeichnet, daß** das elektrochrome Medium mindestens zwei Redoxsubstanzen enthält, von denen wenigstens eine reduzierbar und wenigstens eine oxidierbar ist, wobei wenigstens eine farbig wird.

11. Elektrisch steuerbare Kamerablende nach Anspruch 10 **dadurch gekennzeichnet, daß**
a) die reduzierbaren Substanzen wenigstens zwei chemisch reversible Reduktionswellen im Cyclischen Voltammogramm und die oxidierbaren Substanzen entsprechend wenigstens zwei chemisch reversible Oxidationswellen besitzen, oder
b) eine reduzierbare Substanz und eine oxidierbare Substanz über eine Brücke B kovalent aneinander gebunden sind, oder
c) als reduzierbare und/oder oxidierbare Substanzen solche ausgewählt sind, bei denen der reversible Übergang zwischen der oxidierbaren Form und der reduzierbaren Form mit dem Bruch bzw. dem Aufbau einer σ-Bindung verbunden ist, oder
d) die reduzierbaren Substanzen und die oxidierbaren Substanzen Metallsalze oder Metallkomplexe sind von solchen Metallen, die in mindestens zwei Oxidationsstufen existieren, oder
e) die reduzierbare und/oder oxidierbare Substanz Oligo- und Polymere sind, die mindestens eines der genannten Redoxssyteme, aber auch Paare solcher Redoxsysteme, wie sie unter a) bis d) definiert sind, enthalten, oder
f) als reduzierbare und/oder oxidierbare Substanz Mischungen der in a) bis e) beschriebenen Substanzen eingesetzt werden, vorausgesetzt diese Mischungen enthalten mindestens ein reduzierbares und mindestens ein oxidierbares Redoxsystem.

12. Elektrisch steuerbare Kamerablende nach einem der Ansprüche 1 bis 11, **dadurch gekennzeichnet, daß** auf mindestens einer der beiden Zellenoberflächen eine Antireflexbeschichtung aufgebracht ist.

13. Bildaufzeichnungsgerät mit einer elektrisch steuerbaren Kamerablende nach einem der Ansprüche 1 bis 12, **dadurch gekennzeichnet, daß** das elektrische Signal zur Steuerung der Kamerablende von einem Belichtungssensonor (6) erzeugt wird.

14. Bildaufzeichnungsgerät nach Anspruch 13, **dadurch gekennzeichnet, daß** als Aufzeichnungsmedium (8) ein auf Silberhalogeniden basierender photographischer Film verwendet wird.

15. Bildaufzeichnungsgerät nach Anspruch 13, **dadurch gekennzeichnet, daß** als Aufzeichnungsmedium (8) ein ein- oder zweidimensionales Feld von Halbleiterdetektoren verwendet wird.

16. Bildaufzeichnungsgerät nach einem der Ansprüche 13 bis 15 **dadurch gekennzeichnet, daß** als Bildaufzeichnungsgerät eine Kamera verwendet wird, bei der eine Auswechslung des Films vom Benutzer nicht vorgesehen ist.

## Claims

1. Electrically controllable camera diaphragm comprising two transparent plates (2.1), which are connected to one another by means of a peripheral sealing frame (2.3) to form a cell and whose surfaces facing one another have transparent electrodes (2.6) over their full area which have no structuring and make electrical contact along the peripheral sealing frame, so that applying a voltage between the two electrodes creates circular areas of equipotential, **characterized in that** the cell contains an electrochromic medium (2.4) which makes it possible for the incident amount of light to be regulated through variation of the diameter of the circular transparent centre of the cell by varying the applied voltage.

2. Electrically controllable camera diaphragm according to Claim 1, **characterized in that** the electrodes make contact in such a way that, on application of a voltage, they have essentially the same potential along the sealing frame.

3. Electrically controllable camera diaphragm according to Claim 1 or 2, **characterized in that** the transparent electrodes are connected to one another in an electrically conducting manner.

4. Electrically controllable camera diaphragm according to one of Claims 1 to 3, **characterized in that** the area enclosed by the sealing frame is a circle.

5. Electrically controllable camera diaphragm according to Claim 4, **characterized in that** the circular transparent electrode areas are connected to one another in an electrically conducting manner at their centre points (2.5).

6. Electrically controllable camera diaphragm according to one of Claims 1 to 5, **characterized in that** the transparent electrode layer makes contact through an additional low-resistance, electrically conductive layer which is delimited from the inside by the sealing frame.

7. Electrically controllable camera diaphragm according to one of Claims 1 to 6, **characterized in that** the specific electrical surface resistance of the transparent electrode material is between 2 Ω per square and 10 kΩ per square, preferably between 5 Ω per square and 1 kΩ per square and particularly preferably between 6 Ω per square and 70 Ω per square.

8. Electrically controllable camera diaphragm according to Claim 6 or 7, if dependent on Claim 6, **characterized in that** the electrical surface resistance of the outer low-resistance, electrically conductive layer is less than 0.2 Ω per square.

9. Electrically controllable camera diaphragm according to one of Claims 1 to 8, **characterized in that** the cell is transparent to light without addressing by an electrical signal, and the light-transparent area becomes smaller from the outside inward with increasing electrical voltage between the electrodes.

10. Electrically controllable camera diaphragm according to one of Claims 1 to 9, **characterized in that** the electrochromic medium comprises at least two redox substances, at least one of which is reducible and at least one of which is oxidizable, and at least one of which is coloured.

11. Electrically controllable camera diaphragm according to Claim 10, **characterized in that**
a) the reducible substances have at least two chemically reversible reduction waves in the cyclic voltammogram, and the oxidizable substances correspondingly have at least two chemically reversible oxidation waves, or
b) a reducible substance and an oxidizable substance are covalently bonded to one another via a bridge B, or
c) the reducible and/or oxidizable substances selected are those in which the reversible transition between the oxidizable form and the reducible form is associated with the breaking or formation of a σ-bond, or
d) the reducible substances and the oxidizable substances are metal salts or metal complexes of metals which exist in at least two oxidation states, or
e) the reducible and/or oxidizable substances are oligomers or polymers which contain at least one of said redox systems, but also pairs of such redox systems, as defined under a) to d), or
f) the reducible and/or oxidizable substances employed are mixtures of the substances described in a) to e), provided that these mixtures comprise at least one reducible redox system and at least one oxidizable redox system.

12. Electrically controllable camera diaphragm according to one of Claims 1 to 11, **characterized in that** at least one of the two cell surfaces carries an antireflection coating.

13. Image-recording device having an electrically controllable camera diaphragm according to one of Claims 1 to 12, **characterized in that** the electrical signal for control of the camera diaphragm is generated by an exposure sensor (6).

14. Image-recording device according to Claim 13, **characterized in that** the recording medium (8) used is a silver halide-based photographic film.

15. Image-recording device according to Claim 13, **characterized in that** the recording medium (8) used is a one- or two-dimensional field of semiconductor detectors.

16. Image-recording device according to one of Claims 13 to 15, **characterized in that** the image-recording device used is a camera where there is no provision for the user to change the film.

## Revendications

1. Diaphragme de prise de vues commandable électriquement, contenant deux plaques transparentes (2.1) qui sont reliées l'une à l'autre par un cadre étanche périphérique (2.3) pour former une cellule et qui présentent sur les surfaces planes en vis-à-vis des électrodes transparentes (2.6) sans structuration qui sont en contact électrique le long du cadre étanche périphérique de telle façon que l'application d'une tension entre les deux électrodes génère des surfaces équipotentielles circulaires, **caractérisé en ce qu'**il y a dans la cellule un milieu électrochrome (2.4) qui permet de réguler la quantité de lumière incidente en faisant varier le diamètre du centre transparent circulaire de la cellule par le biais d'une variation de la tension appliquée.

2. Diaphragme de prise de vues commandable électriquement selon la revendication 1, **caractérisé en ce que** les électrodes sont mises en contact de telle façon qu'elles présentent pratiquement le même potentiel le long du cadre étanche lorsqu'on y applique une tension.

3. Diaphragme de prise de vues commandable électriquement selon la revendication 1 ou la revendication 2, **caractérisé en ce que** les électrodes électriques transparentes sont reliées entre elles de manière conductrice.

4. Diaphragme de prise de vues commandable électriquement selon l'une des revendications 1 à 3, **caractérisé en ce que** la surface entourée par le cadre étanche est un cercle.

5. Diaphragme de prise de vues commandable électriquement selon la revendication 4, **caractérisé en ce que** les surfaces d'électrodes transparentes circulaires sont reliées entre elles de manière électriquement conductrice au niveau de leur point milieu (2.5).

6. Diaphragme de prise de vues commandable électriquement selon l'une des revendications 1 à 5, **caractérisé en ce que** la couche d'électrode transparente est mise en contact par une couche électriquement conductrice supplémentaire de faible résistivité qui est délimitée par le cadre étanche.

7. Diaphragme de prise de vues commandable électriquement selon l'une des revendications 1 à 6, **caractérisé en ce que** la résistance surfacique électrique spécifique du matériau d'électrode transparente se situe dans la plage de 2 Ω par carré à 10 kΩ par carré, de préférence de 5 Ω par carré à 1 kΩ par carré et de façon particulièrement préférée de 6 Ω par carré à 70 Ω par carré.

8. Diaphragme de prise de vues commandable électriquement selon la revendication 6, ou selon la revendication 7 lorsqu'elle est dépendante de la revendication 6, **caractérisé en ce que** la résistance surfacique électrique de la couche externe électriquement conductrice de faible résistivité est inférieure à 0,2 Ω par carré.

9. Diaphragme de prise de vues commandable électriquement selon l'une des revendications 1 à 8, **caractérisé en ce que**, en l'absence d'excitation par un signal électrique, la cellule est transparente et **en ce que** la surface transparente diminue de l'extérieur vers l'intérieur à mesure que la tension électrique entre les électrodes augmente.

10. Diaphragme de prise de vues commandable électriquement selon l'une des revendications 1 à 9, **caractérisé en ce que** le milieu électrochrome contient au moins deux substances oxydoréductrices dont l'une au moins est réductible et l'une au moins est oxydable, l'une au moins devenant colorée.

11. Diaphragme de prise de vues commandable électriquement selon la revendication 10, **caractérisé en ce que**
a) les substances réductibles possèdent au moins deux ondes de réduction chimiquement réversibles dans le voltammogramme cyclique et, de manière correspondante, les substances oxydables possèdent au moins deux ondes d'oxydation chimiquement réversibles, ou
b) une substance réductible et une substance oxydable sont liées entre elles de manière covalente par le biais d'un pont B, ou
c) les substances réductibles et/ou oxydables choisies sont celles pour lesquelles la transition réversible entre la forme oxydable et la forme réductible est liée à la rupture ou à la formation d'une liaison σ, ou
d) les substances réductibles.et les substances oxydables sont des sels de métaux ou des complexes métalliques de ces métaux qui existent à moins deux degrés d'oxydation, ou
e) les substances réductibles et/ou oxydables sont des oligomères et des polymères qui contiennent l'un au moins des systèmes oxydoréducteurs précités mais aussi des paires de ces systèmes oxydoréducteurs tels qu'ils sont définis aux points a) à d), ou
f) on utilise comme substance réductible et/ou oxydable des mélanges des substances décrites aux points a) à e), à la condition que ces mélanges contiennent au moins un système oxydoréducteur réductible et au moins un système oxydoréducteur oxydable.

12. Diaphragme de prise de vues commandable électriquement selon l'une des revendications 1 à 11, **caractérisé en ce qu'**un revêtement antireflets est déposé sur l'une au moins des deux surfaces de la cellule.

13. Appareil de prise de vues avec un diaphragme de prise de vues commandable électriquement selon l'une des revendications 1 à 12, **caractérisé en ce que** le signal électrique de commande du diaphragme de prise de vues est généré par un capteur d'exposition (6).

14. Appareil de prise de vues selon la revendication 13, **caractérisé en ce que** l'on utilise comme support de prise de vues (8) un film photographique à base d'halogénure d'argent.

15. Appareil de prise de vues selon la revendication 13, **caractérisé en ce que** l'on utilise comme support de prise de vues (8) un champ uni- ou bidimensionnel de détecteurs à semiconducteurs.

16. Appareil de prise de vues selon l'une des revendications 13 à 15, **caractérisé en ce que** l'on utilise comme appareil de prise de vues une chambre de prise de vue dans laquelle il n'est pas prévu de changement du film par l'utilisateur.
